# EUROPÄISCHE PATENTANMELDUNG

(11) **EP 4 008 760 A1**
(43) Veröffentlichungstag der Anmeldung: **08.06.2022**
(21) Anmeldenummer: 20212138.0
(22) Anmeldetag: 07.12.2020
(51) Int. Cl.: C10G 2/00, B01D 53/00, C01B 3/00, C07C 1/00

(54) **ANLAGE UND VERFAHREN ZUR HERSTELLUNG VON SYNTHETISCHEN KRAFTSTOFFEN OHNE FRISCHWASSER**

(71) Anmelder: EDL Anlagenbau Gesellschaft mbH, 04158 Leipzig (DE); Haid, Michael, 40885 Ratingen (DE)
(72) Erfinder: Gambert, Robert, 04668 Grimma (DE); Haid, Michael, 040885 Ratingen (DE)
(74) Vertreter: Henkel & Partner mbB

(57) **Zusammenfassung**

Die vorliegende Erfindung betrifft eine Anlage zur Herstellung von synthetischen Kraftstoffen, insbesondere von Flugturbinenkraftstoff (Kerosin), Benzin und/oder Diesel, umfassend:
a) eine Einrichtung zur getrennten Gewinnung von Kohlendioxid und Wasser aus der Umgebungsluft,
b) eine Synthesegasherstellungseinrichtung zur Herstellung eines Kohlenmonoxid, Wasserstoff, Kohlendioxid und Wasser umfassenden Rohsynthesegases, wobei die Synthesegasherstellungseinrichtung eine von der Einrichtung zur getrennten Gewinnung von Kohlendioxid und Wasser aus der Umgebungsluft führende Zufuhrleitung für Kohlendioxid, eine Zufuhrleitung für Luft und eine Zufuhrleitung für Wasser aufweist,
c) eine Trenneinrichtung zur Abtrennung von Kohlendioxid und Wasser aus dem in der Synthesegasherstellungseinrichtung hergestellten Rohsynthesegas,
d) eine Fischer-Tropsch-Einrichtung zur Herstellung von Kohlenwasserstoffen durch ein Fischer-Tropsch-Verfahren aus dem Synthesegas, aus dem in der Trenneinrichtung Kohlendioxid und Wasser abgetrennt wurden,
e) eine Raffinationseinrichtung zur Raffination der in der Fischer-Tropsch-Einrichtung hergestellten Kohlenwasserstoffe zu den synthetischen Kraftstoffen,
f) eine Entsalzungseinrichtung zur Entsalzung von Wasser, wobei die Entsalzungseinrichtung eine Wasserzufuhrleitung von der Einrichtung zur getrennten Gewinnung von Kohlendioxid und Wasser aus der Umgebungsluft, eine Wasserzufuhrleitung von der Synthesegasherstellungseinrichtung und eine Wasserzufuhrleitung von der Trenneinrichtung sowie eine Wasserabfuhrleitung von der Fischer-Tropsch-Einrichtung aufweist, und
g) eine Wasserreinigungseinrichtung, welche eine von der Raffinationseinrichtung führende Wasserzufuhrleitung und/oder eine von der Fischer-Tropsch-Einrichtung führende Wasserzufuhrleitung jeweils zur Reinigung von darin anfallendem Wasser umfasst.

## Beschreibung

Die vorliegende Erfindung betrifft eine Anlage sowie ein Verfahren zur Herstellung von synthetischen Kraftstoffen, insbesondere von Flugturbinenkraftstoff, Diesel und/oder Benzin.

Es gibt eine Reihe verschiedener Verfahren zur Herstellung von Kraftstoffen, wie Flugturbinenkraftstoff, Diesel, Benzin oder dergleichen. Solche Verfahren basieren überwiegend auf der Aufbereitung von fossilen Rohstoffen, wie beispielsweise auf der Raffination von Erdöl, auf der Verflüssigung von Kohle oder auf der Synthese von Kraftstoffen aus Erdgas, Wasser und Sauerstoff. Die Synthese von Kraftstoffen aus Erdgas, Wasser und Sauerstoff wird auch als "gas-to-liquids"-Verfahren bezeichnet. Bei diesen Verfahren wird aus Erdgas, Wasser und Sauerstoff zunächst Wasserstoff und Kohlenmonoxid umfassendes Synthesegas hergestellt, welches dann in einer Fischer-Tropsch-Synthese zu Kohlenwasserstoffen umgewandelt wird, die vornehmlich aus langkettigen Normalparaffinen bestehen. Diese Kohlenwasserstoffe werden dann durch Cracken und Isomerisierung zu synthetischen Kraftstoffen umgesetzt.

Ein dazu ähnliches Verfahren ist die als "power-to-liquids" bezeichnete Umwandlung von elektrischer Energie zu synthetischen Kraftstoffen. Hierzu werden Wasser und Kohlendioxid zu Synthesegas umgesetzt, welche dann ähnlich wie in den "gas-to-liquids"-Verfahren zu synthetischen Kraftstoffen weiterverarbeitet werden. Ein wesentlicher Nachteil der "gas-to-liquids"-Verfahren und der "power-to-liquids" Verfahren ist es, dass erhebliche Mengen an Frischwasser benötigt werden. Wasser ist jedoch in der geforderten Reinheit ein teurer Rohstoff. Zudem werden in den bekannten Verfahren vergleichsweise hohe Mengen an in den Verfahren ungenutzten Abgasen und Abwasser erzeugt, welche umweltpolitisch unerwünscht sind.

Ausgehend davon lag der vorliegenden Erfindung die Aufgabe zugrunde, eine Anlage und ein Verfahren zur Herstellung von synthetischen Kraftstoffen bereitzustellen, welche(s) ohne Frischwasserzufuhr und mit dem Anfall nur sehr geringfügiger Mengen an ungenutzten Abgasen und Abwasser betrieben werden kann und, welches dennoch ausschließlich mit elektrischer Energie und bevorzugt erneuerbarer Energie betrieben werden kann.

Erfindungsgemäß wird diese Aufgabe gelöst durch eine Anlage zur Herstellung von synthetischen Kraftstoffen, insbesondere von Flugturbinenkraftstoff, Diesel und/oder Benzin, welche umfasst:
a) eine Einrichtung zur getrennten Gewinnung von Kohlendioxid und Wasser aus der Umgebungsluft,
b) eine Synthesegasherstellungseinrichtung zur Herstellung eines Kohlenmonoxid, Wasserstoff, Kohlendioxid und Wasser umfassenden Rohsynthesegases, wobei die Synthesegasherstellungseinrichtung eine von der Einrichtung zur getrennten Gewinnung von Kohlendioxid und Wasser aus der Umgebungsluft führende Zufuhrleitung für Kohlendioxid, eine Zufuhrleitung für Luft und eine Zufuhrleitung für Wasser(dampf) aufweist,
c) eine Trenneinrichtung zur Abtrennung von Kohlendioxid und Wasser aus dem in der Synthesegasherstellungseinrichtung hergestellten Rohsynthesegas,
d) eine Fischer-Tropsch-Einrichtung zur Herstellung von Kohlenwasserstoffen durch ein Fischer-Tropsch-Verfahren aus dem Synthesegas, aus dem in der Trenneinrichtung Kohlendioxid und Wasser abgetrennt wurden,
e) eine Raffinationseinrichtung zur Raffination der in der Fischer-Tropsch-Einrichtung hergestellten Kohlenwasserstoffe zu den synthetischen Kraftstoffen,
f) eine Entsalzungseinrichtung zur Entsalzung von Wasser, wobei die Entsalzungseinrichtung eine Wasserzufuhrleitung von der Einrichtung zur getrennten Gewinnung von Kohlendioxid und Wasser aus der Umgebungsluft, eine Wasserzufuhrleitung von der Synthesegasherstellungseinrichtung und eine Wasserzufuhrleitung von der Trenneinrichtung sowie eine Wasserabfuhrleitung von der Fischer-Tropsch-Einrichtung aufweist, und
g) eine Wasserreinigungseinrichtung, welche eine von der Raffinationseinrichtung führende Wasserzufuhrleitung und/oder eine von der Fischer-Tropsch-Einrichtung führende Wasserzufuhrleitung jeweils zur Reinigung von darin anfallendem Wasser umfasst.

Indem in der erfindungsgemäßen Anlage und bei dem erfindungsgemäßen Verfahren das für die Treibstoffsynthese, insbesondere für die Synthesegasherstellung und für die Fischer-Tropsch-Synthese, benötigte Wasser und Kohlendioxid aus der Umgebungslust gewonnen wird und das während der Treibstoffsynthese, wie insbesondere der Synthesegasherstellung und der Fischer-Tropsch-Synthese, anfallende Wasser in der Entsalzungseinrichtung und Wasserreinigungseinrichtung in einem zur Kreislaufführung erforderlichen Ausmaß gereinigt werden, können die erfindungsgemäße Anlage und das erfindungsgemäße Verfahren allein durch aus der Umgebungsluft hergestelltes Wasser betrieben werden, also ohne Zufuhr von Frischwasser und insbesondere auch kohlendioxidneutral. Mithin wirken hier die Einrichtung zur getrennten Gewinnung von Kohlendioxid und Wasser aus der Umgebungsluft, die Entsalzungseinrichtung sowie die Wasserreinigungseinrichtung synergistisch zusammen. Abgesehen davon kann hierdurch die Menge an während deren Betrieb aus der Anlage abgeführten Abwassers beträchtlich verringert werden. Zudem erlauben es die erfindungsgemäße Anlage und das erfindungsgemäße Verfahren, die Menge an ungenutzten Abgasen signifikant zu verringern, da die anfallenden Prozessgase in den einzelnen Anlagenteilen wiederverwendet werden können und werden. Schließlich können die erfindungsgemäße Anlage und das erfindungsgemäße Verfahren ausschließlich mit elektrischer Energie und so ressourcenschonend betrieben werden, da natürliche und fossile Rohstoffe, wie Erdöl, Erdgas und dergleichen, nicht benötigt werden.

Bei einer Einrichtung zur getrennten Gewinnung von Kohlendioxid und Wasser aus der Umgebungsluft handelt es sich gemäß der vorliegenden Erfindung um eine Einrichtung, welche Kohlendioxid und Wasser aus der Umgebungsluft gewinnen und dann getrennt voneinander zur Verfügung stellen kann. Eine Einrichtung zur getrennten Gewinnung von Kohlendioxid und Wasser aus der Umgebungsluft kann mithin das Kohlendioxid und das Wasser gleichzeitig aus der Luft gewinnen, wobei jedoch danach das Wasser von dem Kohlendioxid getrennt wird, so dass die Einrichtung zur getrennten Gewinnung von Kohlendioxid und Wasser einen Wasserstrom und einen davon getrennten Kohlendioxidstrom zur Verfügung stellt.

Erfindungsgemäß ist die Trenneinrichtung zur Abtrennung von Kohlendioxid und Wasser aus dem in der Synthesegasherstellungseinrichtung hergestellten Rohsynthesegas ausgestaltet, ist die Fischer-Tropsch-Einrichtung zur Herstellung von Kohlenwasserstoffen durch ein Fischer-Tropsch-Verfahren aus dem Synthesegas, aus dem in der Trenneinrichtung Kohlendioxid und Wasser abgetrennt wurden, ausgestaltet, und ist die Raffinationseinrichtung zur Raffination der in der Fischer-Tropsch-Einrichtung hergestellten Kohlenwasserstoffe zu den synthetischen Kraftstoffen ausgestaltet. Das heißt, die Trenneinrichtung zur Abtrennung von Kohlendioxid und Wasser ist mit der Synthesegasherstellungseinrichtung über eine Zufuhrleitung für Rohsynthesegas verbunden, die Fischer-Tropsch-Einrichtung zur Herstellung von Kohlenwasserstoffen durch ein Fischer-Tropsch-Verfahren ist mit der Trenneinrichtung über eine Zufuhrleitung für Synthesegas verbunden und die Raffinationseinrichtung ist mit der Fischer-Tropsch-Einrichtung über eine Zufuhrleitung für Kohlenwasserstoffe verbunden.

Wie vorstehend dargelegt, kann die erfindungsgemäße Anlage ohne Frischwasser betrieben werden und weist daher bevorzugt keine Frischwasserzufuhrleitung auf. Frischwasserzufuhrleitung bezeichnet dabei jede Leitung, welche Wasser von außen in die Anlage führt, ausgenommen von Leitung(en), welche Umgebungsluft, die zu einem geringen Prozentsatz Wasser enthält, in die Anlage führt.

In Weiterbildung des Erfindungsgedankens wird vorgeschlagen, dass die Anlage ferner einen Pre-Reformer zur Umwandlung höherer Kohlenwasserstoffe in Methan, Kohlenoxide und Wasserstoff sowie eine von der Wasserreinigungseinrichtung zu dem Pre-Reformer führende Wasserzufuhrleitung aufweist. Höhere Kohlenwasserstoffe sind dabei alle mehr als ein Kohlenstoffatom pro Molekül aufweisende Kohlenwasserstoffverbindungen. Der Pre-Reformer erlaubt den Abbau der in der Fischer-Tropsch-Einrichtung und in der Raffinationseinrichtung angefallenen Kohlenwasserstoffe zu Methan, Kohlenoxide und Wasserstoff und somit deren Wiederverwertung in der erfindungsgemäßen Anlage, beispielsweise durch Zuführung zu der Synthesegasherstellungseinrichtung.

Mithin ist es bevorzugt, dass die Anlage ferner eine von der Raffinationseinrichtung in den Pre-Reformer führende Prozessgaszufuhrleitung, eine von der Fischer-Tropsch-Einrichtung in den Pre-Reformer führende Rückgasleitung sowie eine von dem Pre-Reformer in die Synthesegasherstellungseinrichtung führende Kreislaufgasleitung aufweist, um so die in der Raffinationseinrichtung und der Fischer-Tropsch-Einrichtung anfallenden Prozessgase zumindest weitgehend wiederzuverwerten. Ferner ist es bevorzugt, dass von dem Pre-Reformer eine Wasserdampfrückfuhrleitung und von der Fischer-Tropsch-Einrichtung eine Wasserdampfrückfuhrleitung in die Synthesegasherstellungseinrichtung führen.

Ungeachtet dessen, ist es bevorzugt, einen Teil des während des Betriebs der Fischer-Tropsch-Einrichtung anfallenden Prozessgases, welches zur Unterscheidbarkeit von den anderen Prozessgasen nachfolgend Fackelgas genannt wird, aus der Anlage als Fackelgas abzuführen, um eine Anreicherung der Prozessgase mit Inertgasen zu vermeiden. Aus diesem Grund ist es bevorzugt, dass die Fischer-Tropsch-Einrichtung ferner eine Fackelgasabfuhrleitung aufweist.

Gemäß einer weiteren bevorzugten Ausführungsform der vorliegenden Erfindung handelt es sich bei der Einrichtung zur getrennten Gewinnung von Kohlendioxid und Wasser aus der Umgebungsluft um eine Direct-Air-Capture-Einrichtung, welche mehrere Adsorptions-/Desorptionsmodule derart parallel geschaltet aufweist, dass ein Adsorptions-/Desorptionsmodul nach Erreichen seiner Gleichgewichtsbeladung von dem Adsorptionsmodus in den Desorptionsmodus umgeschaltet wird. Während des Betriebs der Direct-Air-Capture-Einrichtung werden aus der Umgebungsluft mittels Adsorption an einem Adsorptionsmittel, vorzugsweise aminfunktionalisierte poröse Feststoffe, in einem diskontinuierlichen Prozess Kohlendioxid und Wasser aus der Luft abgetrennt. Das so adsorbierte Kohlendioxid und Wasser bzw. Wasserdampf werden dann durch Desorption von dem Adsorptionsmittel getrennt, sobald das Adsorptionsmittel mit dem Kohlendioxid und Wasser beladen ist. Um den Prozess zumindest quasikontinuierlich zu gestalten, werden vorzugsweise mehrere Adsorptions-/Desorptionsmodule wie vorstehend dargelegt parallel geschalten. Während die Adsorption bei niedriger Temperatur, vorzugsweise bei Umgebungstemperaturen (-20 bis 40°C) und Normaldruck durchgeführt wird, wird die Desorption unter Vakuum von beispielsweise 0.1 bis 0.3 bar abs und bei erhöhter Temperatur von vorzugsweise 120 bis 150°C durchgeführt. Sobald das Adsorptionsmittel mit dem Kohlendioxid und Wasser beladen ist, wird zur Einleitung der Desorption die Luftzu- und abfuhr zu der Einrichtung abgesperrt und die Desorptionsphase wird eingeleitet indem ein Heizmedium durch das Adsorptionsmittel gepumpt wird, um das Adsorptionsmittel aufzuheizen. Gleichzeitig wird eine Wasserringpumpe zur Absaugung des Gemisches aus Kohlendioxid und Wasserdampf angeschaltet, welche zusätzlich zu den hohen Desorptionstemperaturen von 150 bis 200°C ein Vakuum erzeugt, um eine optimale Desorption zu ermöglichen. Der Gasstrom aus dem Adsorptions-/Desorptionsmodul wird vor der Wasserringpumpe mit Kühlwasser gekühlt und außerdem erfolgt eine Wasserkühlung des Flüssigkeitsringes der Wasserringpumpe. Die Wasserringpumpe erzeugt einen so geringen Druck, dass das Gemisch aus hochreinem Kohlendioxid und Wasser in einem nachfolgenden Abscheider getrennt werden kann. Obwohl die Verunreinigungen in der Luft prinzipiell als relativ gering betrachtet werden können, reichern sich auf Grund des diskontinuierlichen Verfahrens der Adsorption zahlreiche Verunreinigungen in dem aus der Umgebungsluft abgetrennten Wasser, wie insbesondere zahlreiche An- und Kationen (wie Ammoniak, Kalzium, Magnesium, Eisen, Kupfer, Mangan und wie Chloride, Sulfate, Nitride, Nitrate, Sulfate etc.) an, die vor der nachfolgenden Synthesegasherstellung abgetrennt werden müssen. Für die Synthesegasherstellung mit der erfindungsgemäß bevorzugten Co-Solid-Oxid-Elektrolysezelle wird eine elektrische Leitfähigkeit von maximal 2 *µ*S/cm und bevorzugt weniger als 2 *µ*S/cm benötigt. Daher werden das in der Einrichtung zur getrennten Gewinnung von Kohlendioxid und Wasser aus der Umgebungsluft gewonnene Kohlendioxid und Wasser nicht zusammen der Synthesegasherstellungseinrichtung zugeführt, sondern zunächst das Wasser durch Kondensation von dem Kohlendioxid abgetrennt, wobei das abgetrennte Wasser der Entsalzungseinrichtung zugeführt wird und das von Wasser befreite Kohlendioxid der Synthesegasherstellungseinrichtung zugeführt wird. Sobald die Desorption beendet ist, wird das Adsorptions-/Desorptionsmodul zunächst auf eine Temperatur um die 25°C heruntergekühlt, bevor die Adsorption von Kohlendioxid und Wasser aus der Luft erneut beginnt. Dazu werden die Luftzu- und abfuhren zu der Einrichtung wieder geöffnet.

Das für die Synthesegasherstellung erforderliche Wasser mit der erforderlichen Reinheit wird der Synthesegasherstellungseinrichtung über die vorstehend genannte Zufuhrleitung für Wasserdampf zugeführt, wobei die Zufuhrleitung mit Wasserdampf gespeist werden kann, welcher in der Entsalzungseinrichtung in Form von Wasser gereinigt worden ist, oder vorzugsweise mit Wasserdampf, welches aus dem Pre-Reformer und aus der Fischer-Tropsch-Einrichtung stammt.

Gute Ergebnisse werden bei der Synthesegasherstellung insbesondere erzielt, wenn die Synthesegasherstellungseinrichtung ein oder mehrere Co-Solid-Oxid-Elektrolysezellen umfasst. Das der Synthesegasherstellungseinrichtung separat zugeführte Wasser(dampf) und Kohlendioxid werden in der vorzugsweise bei 800 bis 1.000°C, drucklos und mit einer Gleichspannung von vorzugsweise 1.29 V, maximal 1.6 V pro Ebene und 0,6 A/cm² betriebenen Co-Solid-Oxid-Elektrolysezelle zu einem Gasgemisch enthaltend Kohlenmonoxid, Wasserstoff, Wasser(dampf) und Kohlendioxid umgesetzt. Das so hergestellte Rohsynthesegas enthält beispielsweise 50 bis 60 Mass.-% Kohlenmonoxid, 5 bis 10 Mass.-% Wasserstoff, 10 bis 12 Mass.-% Wasser(dampf) und 20 bis 30 Mass.-% Kohlendioxid. Auf der Sekundärseite der Keramikmembranen wird zur Abführung des sich bildenden Sauerstoffstromes heiße Luft eingeblasen. Die Abluft setzt sich dann aus Luft und einen wesentlichen Sauerstoffanteil zusammen. In der Co-Solid-Oxid-Elektrolysezelle werden die Wasserdampfelektrolyse (Reaktion (1): 2*H₂O = 2*H₂ + O₂) mit der Reverse-Wassergas-Shift Reaktion (RWGS = Reverse Water Gas Shift) (Reaktion (2): CO₂ + H₂ = H₂O + CO) verbunden. Dabei wird 1 Mol des H₂ aus der Reaktion (1) in der Reaktion (2) verbraucht und 1 Mol des entstandenen Wassers der Reaktion (2) in der Reaktion (1) verbraucht, so dass sich die summarische Reaktionsgleichung
CO₂ + 2*H₂O = 2*H₂ + CO + 1,5*O₂ ergibt, die im rein stöchiometrischen Fall ein H₂/CO-Verhältnis von 2 produziert. Der Sauerstoff wird wieder über die Membran in die Luftkammer der Co-Solid-Oxid-Elektrolysezelle transportiert. Das H₂/CO-Verhältnis kann über die Edukte von 1,5 bis 5 eingestellt werden, wobei im Hinblick auf nachfolgende Fischer-Tropsch-Synthese das H₂/CO-Verhältnis bevorzugt auf etwas mehr als 2,0 eingestellt wird. Insgesamt werden in der Synthesegasherstellungseinrichtung ein Kohlenmonoxid, Wasserstoff, Wasser(dampf) und Kohlendioxid enthaltenen Gasgemisch sowie flüssiges Wasser als Wasser-Kondensat erzeugt. Auch das so erzeugte flüssige Wasser weist eine vergleichsweise hohe Anreicherung von Ionen auf, weswegen dieses durch die Wasserzufuhrleitung von der Synthesegasherstellungseinrichtung in die Entsalzungseinrichtung geführt wird. Das Rohsynthesegas kann in einem Bereich eines Molverhältnisses von H₂/CO von 1,5 bis 5 erzeugt werden, wobei für die Fischer-Tropsch-Synthese ein H₂/CO Verhältnis von größer 2,0 angestrebt wird.

Das in den ein oder mehreren Co-Solid-Oxid-Elektrolysezellen erzeugte Rohsynthesegas enthält noch wesentliche Anteile von Kohlendioxid und geringere Mengen von Wasserdampf, die zur Optimierung der Fischer-Tropsch-Synthese in der nachgeschalteten Trenneinrichtung abgetrennt werden. Vorzugsweise umfasst die Trenneinrichtung einen Aminwäscher zur Abtrennung von Kohlendioxid durch Absorption aus dem Rohsynthesegas, einen Verdichter zur Kondensation von Wasser und zur Verdichtung des Synthesegases auf den in der Fischer-Tropsch-Synthese erforderlichen Druck, eine zu der Synthesegasherstellungseinrichtung oder in die von der Einrichtung zur getrennten Gewinnung von Kohlendioxid und Wasser in die Synthesegasherstellungseinrichtung führende Leitung für Kohlendioxid führende Kohlendioxidrückführleitung sowie eine zu der Fischer-Tropsch-Einrichtung führende Synthesegaszufuhrleitung. In dem Aminwäscher wird Kohlendioxid aus dem Rohsynthesegas durch Absorption mit wenigstens einem Absorptionsmittel, welches bevorzugt aus einer Aminverbindung, wie Monoethanolamin und/oder Diglycolamin und Wasser besteht, abgetrennt und über die Kohlendioxidrückführleitung zu der Synthesegasherstellungseinrichtung zurückgeführt. In dem nachgeschalteten Verdichter wird das verbliebene Synthesegas auf den in der Fischer-Tropsch-Synthese erforderlichen Druck verdichtet, wobei gleichzeitig Wasser kondensiert und aus dem Synthesegas abgetrennt wird. Während das abgetrennte Wasser über die Wasserzufuhrleitung von der Trenneinrichtung in die der Entsalzungseinrichtung geleitet wird, wird das verbleibende (gereinigte) Synthesegas der Fischer-Tropsch-Einrichtung zugeführt. Das der Fischer-Tropsch-Einrichtung zugeführte Synthesegas enthält vorzugsweise 80 bis 90 Mass.-% Kohlenmonoxid und 10 bis 15 Mass.-% Wasserstoff.

In der Entsalzungseinrichtung werden die Abwasserströme zumindest aus der Einrichtung zur getrennten Gewinnung von Kohlendioxid und Wasser, aus der Synthesegasherstellungseinrichtung sowie aus der Trenneinrichtung derart aufbereitet, dass diese in anderen Anlagenteilen, wie insbesondere in der Synthesegasherstellungseinrichtung, in der Fischer-Tropsch-Synthese und, falls vorhanden, in der Wasserstoffproduktion unmittelbar eingesetzt werden können. Zu diesem Zweck wird es in Weiterbildung des Erfindungsgedankens vorgeschlagen, dass die Entsalzungseinrichtung so ausgestaltet ist, dass Wasser soweit entsalzt und entgast werden kann, dass dessen Leitfähigkeit bei kleiner 20 µS/cm, bevorzugt kleiner 10 µS/cm, besonders bevorzugt kleiner 5 µS/cm und höchst bevorzugt maximal 2 µS/cm liegt. Zu diesem Zweck weist die Entsalzungseinrichtung vorzugsweise ein oder mehrere Anionen- und Kationenaustauscher sowie eine Membraneinrichtung zur Entgasung auf. Während der Entgasung wird Kohlendioxid und Sauerstoff aus dem Wasser abgetrennt. Die Entladung der An- und Kationentauscher erfolgt vorzugsweise mit Hilfe von Natronlauge bzw. Salzsäure. Das entstehende Abwasser hat in etwa die 6 -fache lonenkonzentration als das Wasser vor der Zuführung in die Entsalzungseinrichtung und kann auf Grund einer gleichzeitigen Entladung des An- und Kationentauschers als neutrales Abwasser zu einer städtischen Abwasseranlage geführt werden.

Das Synthesegas wird anschließend in der Fischer-Tropsch-Einrichtung zu Kohlenwasserstoffen reagiert. Die Fischer-Tropsch-Synthese wird vorzugsweise in einem Reaktor mit einem Katalysator bei einer Temperatur von 170 bis 270°C, bevorzugt von 190 bis 250°C und höchst bevorzugt 210 bis 230°C, wie etwa 220°C, durchgeführt. Als Katalysatoren eignen sich insbesondere solche ausgewählt aus der Gruppe bestehend aus Kobaltkatalysatoren, wie bevorzugt Co/MMT (Montmorillonite) oder Co/SiO₂. Die Fischer-Tropsch-Synthese wird vorzugsweise in einen oder mehreren Rohrbündelapparaten durchgeführt, wobei sich der Katalysator in den Rohren befindet, wohingegen das Kühlmedium, vorzugsweise Kesselspeisewasser, im Mantelraum geführt wird. Die Fischer-Tropsch-Einrichtung umfasst bevorzugt einen oder zwei Reaktoren, um die Fischer-Tropsch-Synthese einstufig oder zweistufig durchführen zu können. Aus Kostengründen wird die Fischer-Tropsch-Synthese bevorzugt einstufig durchgeführt. Beispielsweise wird die Fischer-Tropsch-Synthese bei einem Druck von 25 bis 35 bar oder vorzugsweise auch bei einem höheren Druck von beispielsweise 45 bar durchgeführt. Je höher der Druck, desto kleiner können die Reaktoren gebaut werden. Vorzugsweise wird die Fischer-Tropsch-Synthese so durchgeführt, dass ein Kohlenmonoxidumsatz von 0.92 oder mehr erreicht wird. Bei der Fischer-Tropsch-Synthese werden als flüssige Produkte Kondensate und Wachse erhalten, die der nachgeschalteten Raffinationseinrichtung zugeführt werden. Die Kühlung des sehr starken exothermen Prozesses der Fischer-Tropsch-Synthese erfolgt über Kesselspeisewasser, das über eine entsprechende Leitung von der Entsalzungseinrichtung in die Fischer-Tropsch-Einrichtung geführt und zur Kühlung der Reaktoren verdampft wird. Der anfallende Dampf der Fischer-Tropsch-Synthese wird über die vorstehend beschriebene bevorzugte Wasserdampfrückfuhrleitung bevorzugt zumindest zu einem großen Teil der Synthesegasherstellungseinrichtung zugeführt. Die darüberhinausgehende Menge an Dampf aus der Fischer-Tropsch-Einrichtung wird vorzugsweise für die Beheizung in den anderen Anlageneinheiten verwendet, so dass kein externer Dampf erforderlich wird.

In der Raffinationseinrichtung werden die Produkte der Fischer-Tropsch-Synthese zu synthetischen Kraftstoffen, insbesondere Flugzeugturbinenkraftstoff (Kerosin), Diesel und/oder Benzin veredelt. Für die Herstellung von industriell nutzbaren Kerosin, Diesel und Benzin ist es erforderlich, das paraffinische Produkt der Fischer-Tropsch-Synthese durch Hydro-Isomerisierung und Cracken (Iso-Cracking) derart umzuwandeln, dass ein hochwertiger Flugturbinenkraftstoff mit den erforderlichen Kalteigenschaften (vorzugsweise mit einem Temperaturgrenzwert der Filtrierbarkeit entsprechend "Cold Filter Plugging Point" von maximal -40°C) produziert wird. Die schweren Produkte werden im Iso-Cracker-Reaktor derart rezirkuliert, dass nur noch Kerosin und Benzin als Produkte entstehen. Die dabei entstehenden leichten Gase werden als Prozessgase über die vorstehend als bevorzugt beschriebene Prozessgaszufuhrleitung von der Raffinationseinrichtung in den Pre-Reformer geleitet.

Hierzu umfasst die Raffinationseinrichtung vorzugsweise einen oder mehrere Iso-Cracker-Reaktoren mit einem Edelmetallkatalysator, wie vorzugsweise einem Platin- oder Palladiumkatalysator. Besonders bevorzugt sind Edelmetallkatalysatoren, die keine Sulfidierung erfordern, da so eine Verunreinigung der Reaktionsprodukte mit schwefelhaltigen Komponenten vermieden wird, was es wiederum erlaubt, dass das während dem Iso-Cracken erzeugte Prozessgas als auch der erzeugte Wasserdampf in die Synthesegasherstellungseinrichtung, welche bevorzugt ein oder mehrere Co-Solid-Oxid-Elektrolysezellen umfasst, zurückgeführt werden kann. Das Iso-Cracken ist eine katalytische Reaktion, in der insbesondere langkettige paraffinische Kohlenwasserstoffe zu kürzerkettigen Isomeren mit verbesserten Kalteigenschaften für die Herstellung von Kerosin herstellt werden. Die katalytische Reaktion erfolgt bevorzugt in Bettrektoren, die zur Gewährleistung der maximalen Betttemperatur mit Wasserstoff gekühlt werden. Beispielsweise werden diese bei einem Druck von mindestens 70 bar betrieben.

Ferner ist es bevorzugt, dass die Raffinationseinrichtung einen oder mehrere Wasserstoffstripper zum Abtrennen von leichten Kohlenwasserstoffen (nämlich C₁ bis C₄ Kohlenwasserstoffen) umfasst. Schließlich umfasst die Raffinationseinrichtung vorzugsweise eine oder mehrere Destillationssäulen zum Auftrennen der synthetischen Kraftstoffe in einzelne Fraktionen, wie Flugzeugturbinentreibstoff und Diesel, Flugzeugturbinentreibstoff und Benzin, Flugzeugturbinentreibstoff, Benzin und Diesel oder dergleichen.

Für den Iso-Cracker-Reaktor und für den Wasserstoffstripper werden Wasserstoff benötigt. Hierfür wird es in Weiterbildung des Erfindungsgedankens vorgeschlagen, dass die Anlage ferner eine Wasserstoffproduktionseinrichtung sowie vorzugsweise auch eine Wasserstoffverdichtungseinrichtung aufweist. Vorzugsweise erfolgt die Wasserstoffproduktion durch eine alkalische Niedertemperatur-Hochdruck-Wasserelektrolyse. Ferner ist es bevorzugt, dass die Anlage eine Wasserstoffverdichtungseinrichtung aufweist, um den in der Wasserstoffproduktionseinrichtung erzeugten Wasserstoff auf den für die Raffination in dem Iso-Cracker-Reaktor und in dem Wasserstoffstripper benötigten Druck von 60 bis 80 bar, wie etwa 70 bar, zu bringen. Vorzugsweise umfasst die Anlage ferner eine von der Entsalzungseinrichtung zu der Wasserstoffproduktionseinrichtung führende Wasserzufuhrleitung, eine zu der Wasserstoffproduktionseinrichtung führende Luftzufuhrleitung, eine von der Wasserstoffproduktionseinrichtung zu der Wasserstoffverdichtungseinrichtung führende Wasserstoffleitung, eine von der Wasserstoffverdichtungseinrichtung zu der Entsalzungseinrichtung führende Wasserleitung sowie eine von der Wasserstoffverdichtungseinrichtung zu der Raffinationseinrichtung führende Wasserstoffleitung.

Das bei der Fischer-Tropsch-Synthese erzeugte Abwasser mit hohen Kohlenwasserstoffanteilen, wie insbesondere von Alkoholen, Aldehyden, Carbonsäuren etc., mit einem chemischen Sauerstoffbedarf (CSB) von ca. 40.000 mg/l kann nicht direkt einer städtischen biologischen Abwasseranlage zugeführt werden. Aus diesem Grund wird das Fischer-Tropsch-Abwasser über eine entsprechende Leitung vorzugsweise der Wasserreinigungseinrichtung zugeleitet. Ferner wird ebenfalls vorzugsweise das in der Raffination gebildete Wasser über eine entsprechende Leitung der Wasserreinigungseinrichtung zugeleitet. Die Wasserreinigungseinrichtung weist vorzugsweise eine oder mehrere Teilverdampfungseinheiten auf, in der bzw. in denen vorzugsweise mindestens 70% des Abwassers durch Teilverdampfung und damit wenigstens 95% aller Kohlenwasserstoffe abgetrennt werden. Vorzugsweise werden das abgetrennte Wasser und die abgetrennten Kohlenwasserstoffe über eine entsprechende Leitung in den Pre-Reformer geleitet.

Ein weiterer Gegenstand der vorliegenden Erfindung ist ein Verfahren zur Herstellung von synthetischen Kraftstoffen, insbesondere von Flugturbinenkraftstoff, Benzin und/oder Diesel, welches in einer zuvor beschriebenen Anlage durchgeführt wird.

Wie vorstehend dargelegt, kann das erfindungsgemäße Verfahren ohne Frischwasser betrieben werden. Aus diesem Grund ist es bevorzugt, dass dem erfindungsgemäßen Verfahren weniger als 20%, bevorzugt weniger als 10%, besonders bevorzugt weniger als 5% und höchst bevorzugt gar kein Frischwasser zugeführt wird. Frischwasserzufuhr bezeichnet dabei die Zufuhr von jeglichem Wasser von außen in die Anlage, welches nicht in der Einrichtung zur getrennten Gewinnung von Kohlendioxid und Wasser aus der Umgebungsluft gewonnen worden ist.

Gemäß einer weiteren bevorzugten Ausführungsform der vorliegenden Erfindung ist es vorgesehen, dass in der Trenneinrichtung Kohlendioxid von dem Synthesegas durch Absorption mit wenigstens einer Aminverbindung und vorzugsweise mit Monoethanolamin und/oder Diglycolamin und Wasser abgetrennt wird.

Ferner ist es bevorzugt, dass das Wasser in der Entsalzungseinrichtung zu Wasser mit einer Leitfähigkeit von kleiner 20 µS/cm, bevorzugt kleiner 10 µS/cm, besonders bevorzugt kleiner 5 µS/cm und höchst bevorzugt maximal 2 µS/cm gereinigt wird.

In Weiterbildung des Erfindungsgedankens wird vorgeschlagen, dass aus der Fischer-Tropsch-Einrichtung Fackelgas abgeleitet wird, wobei der Fackelgasstrom größer ist als der Quotient von aus dem aus der Einrichtung zur getrennten Gewinnung von Kohlendioxid und Wasser aus der Umgebungsluft abgeführten Strom enthaltenem Mengenstrom von Stickstoff und von Argon und der in dem Rückgasstrom von der Fischer-Tropsch-Einrichtung in den Pre-Reformer eingestellten Gesamtkonzentration von Stickstoff und von Argon, wobei die Gesamtkonzentration von Stickstoff und von Argon in dem Rückgasstrom von der Fischer-Tropsch-Einrichtung in den Pre-Reformer vorzugsweise auf 1,5 bis 10 Mass.-% eingestellt wird. Dadurch wird die Anreicherung von Inertgasen, wie Stickstoff und Argon, in der Synthesegasherstellungseinrichtung und in der Fischer-Tropsch-Einrichtung zuverlässig verhindert.

Vorzugsweise wird in der Raffinationseinrichtung anfallendes Prozessgas, welches bevorzugt Wasserstoff und C₁₋₅-Kohlenwasserstoffe enthält, sowie in der Fischer-Tropsch-Einrichtung anfallendes Rückgas, welches bevorzugt Wasserstoff, Kohlenmonoxid, Kohlendioxid, Wasser, Stickstoff und C₁₋₅-Kohlenwasserstoffe enthält, dem bevorzugt vorhandenen Pre-Reformer zugeführt, in dem diese zu Methan, Kohlenoxide und Wasserstoff umgewandelt werden, bevor das so hergestellte Gas in die Synthesegasherstellungseinrichtung geführt wird.

Gute Ergebnisse werden insbesondere auch erhalten, wenn die Anlage eine Wasserstoffproduktionseinrichtung sowie eine Wasserstoffverdichtungseinrichtung aufweist und die Raffinationseinrichtung einen oder mehrere Iso-Cracker-Reaktoren, einen Wasserstoffstripper und eine oder mehrere Destillationssäulen umfasst, wobei der in der Wasserstoffproduktionseinrichtung erzeugte Wasserstoff der Wasserstoffverdichtungseinrichtung zugeführt und in dieser verdichtet wird und der verdichtete Wasserstoff dem Iso-Cracker-Reaktor sowie dem Wasserstoffstripper der Raffinationseinrichtung zugeführt wird. Das zur Herstellung des Wasserstoffs notwendige Wasser wird der Wasserstoffproduktionseinrichtung vorzugsweise aus der Entsalzungseinrichtung zugeführt.

Gemäß einer weiteren bevorzugten Ausführungsform der vorliegenden Erfindung ist es vorgesehen, dass die Raffinationseinrichtung einen Iso-Cracker-Reaktor umfasst, in dem ein Edelmetall-Katalysator, wie Platin oder Palladium, eingesetzt wird, der keine Sulfidierung erfordert.

In Weiterbildung des Erfindungsgedankens wird es vorgeschlagen, dass die Anlage einen Pre-Reformer umfasst und der Wasserreinigungseinrichtung Wasser aus der Fischer-Tropsch-Einrichtung und Wasser aus der Raffinationseinrichtung zugeführt werden, das Wasser in der Wasserreinigungseinrichtung durch Teilverdampfung so gereinigt werden, dass mindestens 70% des Abwassers durch die Teilverdampfung und damit wenigstens 95% aller Kohlenwasserstoffe abgetrennt werden. Das so abgetrennte Wasser und die so abgetrennten Kohlenwasserstoffe werden dem Pre-Reformer zugeführt und das nicht-teilverdampfte Wasser mit einem CSB von weniger als 2.000 mg/l wird zu einer kommunalen Abwasseranlage geführt.

Vorzugsweise werden wenigstens 80%, weiter bevorzugt wenigstens 90%, besonders bevorzugt wenigstens 95% und höchst bevorzugt 100% des Wassers, welches in der Einrichtung zur getrennten Gewinnung von Kohlendioxid und Wasser aus der Umgebungsluft, in der Synthesegasherstellungseinrichtung, in der Trenneinrichtung sowie in der optionalen Wasserstoffverdichtungseinrichtung anfällt, der Entsalzungseinrichtung zugeführt.

Ferner ist es bevorzugt, dass in der Trenneinrichtung Kohlendioxid so vollständig aus dem Synthesegas abgetrennt wird, dass in dem Rückgas, welches in der Fischer-Tropsch-Einrichtung aus dem Synthesegas erzeugt wird, weniger als 5 Mass.-% Kohlendioxid enthalten sind.

Schließlich ist es bevorzugt, dass in der Raffinationseinrichtung Flugturbinenkraftstoff, Benzin und/oder Diesel und bevorzugt sowohl Flugturbinenkraftstoff als auch Benzin hergestellt werden.

Nachfolgend wird die vorliegende Erfindung unter Bezug auf die Zeichnung näher beschrieben, in der:

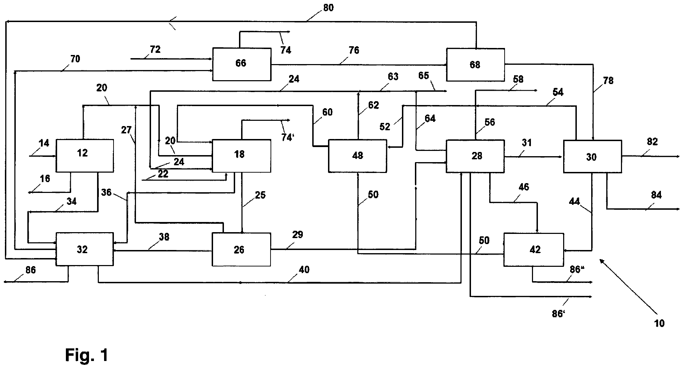

- Fig. 1: eine schematische Ansicht einer zur Herstellung von synthetischen Kraftstoffen zeigt.

Die in der Figur 1 dargestellte Anlage 10 zur Herstellung von synthetischen Kraftstoffen umfasst:
a) eine Einrichtung 12 zur getrennten Gewinnung von Kohlendioxid und Wasser aus der Umgebungsluft mit einer Luftzufuhrleitung 14 und einer Abluftleitung 16,
b) eine Synthesegasherstellungseinrichtung 18 zur Herstellung eines Kohlenmonoxid, Wasserstoff, Kohlendioxid und Wasser umfassenden Rohsynthesegases, wobei die Synthesegasherstellungseinrichtung 18 eine von der Einrichtung 12 zur getrennten Gewinnung von Kohlendioxid und Wasser aus der Umgebungsluft führende Zufuhrleitung 20 für Kohlendioxid, eine Zufuhrleitung 22 für Luft und eine Zufuhrleitung 24 für Wasserdampf und eine Rohsynthesegasabfuhrleitung 25 aufweist,
c) eine Trenneinrichtung 26 zur Abtrennung von Kohlendioxid und Wasser aus dem in der Synthesegasherstellungseinrichtung 18 hergestelltes Rohsynthesegas mit einer Kohlendioxidrückfuhrleitung 27, welche von der Trenneinrichtung 26 in die von der Einrichtung 16 zur getrennten Gewinnung von Kohlendioxid und Wasser aus der Umgebungsluft zu der Synthesegasherstellungseinrichtung 18 führende Zufuhrleitung 20 für Kohlendioxid mündet,
d) eine Fischer-Tropsch-Einrichtung 28 zur Herstellung von Kohlenwasserstoffen durch ein Fischer-Tropsch-Verfahren aus dem Synthesegas, aus dem in der Trenneinrichtung 26 Kohlendioxid und Wasser abgetrennt wurden, wobei das Synthesegas der Fischer-Tropsch-Einrichtung 28 über eine von der Trenneinrichtung 26 in die Fischer-Tropsch-Einrichtung 28 führende Synthesegaszufuhrleitung 29 zugeführt wird,
e) eine Raffinationseinrichtung 30 zur Raffination der in der Fischer-Tropsch-Einrichtung 28 hergestellten Kohlenwasserstoffe zu den synthetischen Kraftstoffen, welche mit der Fischer-Tropsch-Einrichtung über eine Kohlenwasserstoffzufuhrleitung 31 verbunden ist,
f) eine Entsalzungseinrichtung 32 zur Entsalzung von Wasser, wobei die Entsalzungseinrichtung 32 eine Wasserzufuhrleitung 34 von der Einrichtung 12 zur getrennten Gewinnung von Kohlendioxid und Wasser aus der Umgebungsluft, eine Wasserzufuhrleitung 36 von der Synthesegasherstellungseinrichtung 18 und eine Wasserzufuhrleitung 38 von der Trenneinrichtung 26 sowie eine Wasserabfuhrleitung 40 von der Fischer-Tropsch-Einrichtung 28 aufweist, und
g) eine Wasserreinigungseinrichtung 42, welche eine von der Raffinationseinrichtung 30 führende Wasserzufuhrleitung 44 und eine von der Fischer-Tropsch-Einrichtung 28 führende Wasserzufuhrleitung 46 jeweils zur Reinigung von darin anfallendem Wasser umfasst.

Ferner umfasst die Anlage 10 einen Pre-Reformer 48 zur Umwandlung höherer Kohlenwasserstoffe in Methan, Kohlenoxide und Wasserstoff. In den Pre-Reformer 48 führt eine von der Wasserreinigungseinrichtung 42 zu dem Pre-Reformer 48 führende Wasserzufuhrleitung 50 aufweist. Zudem führt in den Pre-Reformer 48 eine Zufuhrleitung 52 für Prozessgas und Rückgas, welche von der aus der Raffinationseinrichtung 30 führenden Prozessgasabfuhrleitung 54 und von der aus der Fischer-Tropsch-Einrichtung 28 führende Gasabfuhrleitung 56 gespeist wird. Ein Teil des aus der Fischer-Tropsch-Einrichtung 28 abgeführten Gases wird in die Zufuhrleitung 52 geleitet, wohingegen der Rest über die Fackelleitung 58 aus der Anlage 10 abgeführt wird. Von dem Pre-Reformer 48 führt eine Kreislaufgasleitung 60 in die Synthesegasherstellungseinrichtung 18 zur Zuführung der in dem Pre-Reformer 48 gebildeten Methans, Kohlenoxiden und Wasserstoffs. Zudem führt von dem Pre-Reformer 48 eine Wasserabfuhrleitung 62 in die Zufuhrleitung 24 für Wasser zu der Synthesegasherstellungseinrichtung 18. In die Zufuhrleitung 24 führt auch eine Wasserdampfrückführleitung 63, welche mit einer aus der Fischer-Tropsch-Einrichtung 28 führende Wasserabfuhrleitung 64 verbunden ist. Die Wasserabfuhrleitung 64 zweigt sich in die eine Wasserdampfrückführleitung 63 und in eine Wasserdampfüberschussleitung 65, welche von der Wasserabfuhrleitung 64 wegführt.

Schließlich umfasst die Anlage 10 auch eine Wasserstoffproduktionseinrichtung 66 sowie eine Wasserstoffverdichtungseinrichtung 68 zur Herstellung von Wasserstoff, welcher in der Raffinationseinrichtung 30 benötigt wird. In die Wasserstoffproduktionseinrichtung 66 führt eine von der Entsalzungseinrichtung 32 kommende Wasserzufuhrleitung 70 sowie eine Luftzufuhrleitung 72. Zudem weist die Wasserstoffproduktionseinrichtung 66 eine Abluftleitung 74 sowie eine in die Wasserstoffverdichtungseinrichtung 68 führende Wasserstoffleitung 76 auf. Von der Wasserstoffverdichtungseinrichtung 68 führt eine Wasserstoffleitung 78 in die Raffinationseinrichtung 30 und eine Wasserleitung 80 in die Entsalzungseinrichtung 32.

Die Raffinationseinrichtung 30 umfasst einen oder mehrere Iso-Cracker-Reaktoren (nicht dargestellt), einen Wasserstoffstripper (nicht dargestellt) und eine oder mehrere Destillationssäulen (nicht dargestellt). Ferner umfasst die Raffinationseinrichtung 30 eine Kerosinleitung 82 und eine Benzinleitung 84.

Zudem führen Abwasserleitungen 86, 86', 86" aus der Entsalzungseinrichtung 32, aus der Fischer-Tropsch-Einrichtung 28 sowie aus der Wasserreinigungseinrichtung 42. Schließlich weist die Synthesegasherstellungseinrichtung 18 auch eine Abluftleitung 74' auf.

Bei dem Betrieb der Anlage 10 wird der Einrichtung 12 zur getrennten Gewinnung von Kohlendioxid und Wasser aus der Umgebungsluft über die Luftzufuhrleitung 16 Luft zugeführt, aus der in der Einrichtung 12 Kohlendioxid und Wasser abgetrennt werden. Verbleibende Abluft wird über die Abluftleitung 16 aus der Einrichtung 12 abgeleitet, wohingegen in der Einrichtung 12 das Wasser durch Kondensation von dem Kohlendioxid getrennt wird. Das abgetrennte Kohlendioxid wird über die Zufuhrleitung 20 in die Synthesegasherstellungseinrichtung 18 geleitet, in die ebenfalls über die Zufuhrleitungen 24, 22 Wasserdampf und Luft zugeführt werden. In der Synthesegasherstellungseinrichtung 18 wird ein Rohsynthesegas umfassend Kohlenmonoxid, Wasserstoff, Wasser(dampf) und Kohlendioxid hergestellt, von dem ein Großteil des Wassers durch Kondensation abgetrennt wird. Das abgetrennte Wasser wird über die Wasserzufuhrleitung 38 in die Entsalzungseinrichtung 32 geführt, wohingegen das Rohsynthesegas über die Leitung 25 in die Trenneinrichtung 26 geführt wird. Dort wird durch Absorption Kohlendioxid aus dem Rohsynthesegas abgetrennt, welches über die Leitung 27 in die Leitung 20 und über diese in die Synthesegasherstellungseinrichtung 18 geleitet wird. Zudem wird in der Trenneinrichtung 26 Wasser durch Kondensation aus dem Rohsynthesegas abgetrennt, welches über die Leitung 38 in die Entsalzungseinrichtung 32 geleitet wird. Das gereinigte Synthesegas schließlich wird über die Leitung 29 in die Fischer-Tropsch-Einrichtung 28 geführt, in der das Synthesegas zu vornehmlich normalparaffinischen Kohlenwasserstoffen umgesetzt wird. Diese Kohlenwasserstoffe werden über die Leitung 31 in die Raffinationseinrichtung 30 geleitet, in der diese durch Hydro-Isomerisierung und Cracken (Iso-Cracking) zu synthetischen Rohkraftstoffen umgesetzt werden, die dann in dem Wasserstoffstripper getrennt werden und in den ein oder mehreren Destillationssäulen der Raffinationseinrichtung 30 in die Fraktionen Kerosin und Benzin aufgetrennt werden, welche über die Leitungen 82, 84 aus der Anlage 10 abgeführt werden. In der Fischer-Tropsch-Einrichtung 28 und in der Raffinationseinheit 30 anfallendes Wasser wird über die Leitungen 46, 44 in die Abwasserreinigungseinrichtung 42 geleitet, in der das Abwasser durch Teilverdampfung gereinigt wird. Die in der Fischer-Tropsch-Einrichtung 28 durchgeführte Reaktion ist eine sehr stark exotherme Reaktion, die gekühlt werden muss. Zu diesem Zweck wird aus der Entsalzungseinrichtung 32 vollentsalztes Wasser der Fischer-Tropsch-Einrichtung 28 über die Wasserabfuhrleitung 40 zugeführt, wobei die anfallende Reaktionswärme der Fischer-Tropsch-Synthese durch die Erzeugung von Wasserdampf über die Wasserabfuhrleitung 64 abgeführt wird. Der Wasserdampf wird zum größten Teil über die Wasserdampfrückführleitung 63 der Synthesegasherstellungseinrichtung 18 zugeführt, wohingegen der überschüssige Wasserdampf aus der Fischer-Tropsch-Einrichtung 61 über die Wasserdampfüberschussleitung 65 abgeführt wird und beispielsweise dazu verwendet wird, um das Abwasser, welches aus der Fischer-Tropsch-Einrichtung 28 über die Wasserzufuhrleitung 46 zu der Wasserreinigungseinrichtung 42 führt, zu verdampfen. Der über die zu dem Pre-Reformer 48 führende Wasserdampfzufuhrleitung 50 abgeführte Wasserdampfstrom enthält ca. 2% Kohlenwasserstoffe, die in dem Pre-Reformer 48 zu Methan, Kohlenoxiden und Wasserstoff umgewandelt werden. Der aus dem Pre-Reformer 48 kommende Wasserdampfstrom wird über die Wasserdampfabfuhrleitung 62 zusammen mit dem aus der Wasserdampfrückführleitung 63 kommenden Wasserdampfstrom über die Zufuhrleitung 24 zu der Synthesegasherstellungseinrichtung 18 geführt. Das verbleibende gereinigte Abwasser wird über die Leitung 86" in die städtische Abwasserreinigung geleitet. Zudem werden in der Fischer-Tropsch-Einrichtung 28 anfallendes Rückgas und in der Raffination anfallendes Prozessgas über die Leitungen 54, 56, 52 in den Pre-Reformer 48 geleitet, in dem höhere Kohlenwasserstoffe in Methan, Kohlenoxide und Wasserstoff umgewandelt werden. In dem Pre-Reformer 48 anfallendes Methan, Kohlenoxide und Wasserstoff werden der Synthesegasherstellungseinrichtung 18 über die Leitung 60 zugeführt. In der Wasserstoffproduktionseinrichtung 66 wird aus über die Leitung 72 zugeführter Luft und über die Leitung 70 zugeführtes Wasser Wasserstoff erzeugt, der als Gemisch mit Wasserdampf über die Leitung 76 der Wasserstoffverdichtungseinrichtung 68 zugeführt wird, in welcher der Wasserstoff auf die erforderliche Dichte verdichtet wird und gleichzeitig das enthaltene Wasser durch Kondensation abgetrennt wird. Während der verdichtete Wasserstoff der Raffinationseinrichtung 30 über die Leitung 78 zugeführt wird, wird das abgetrennte Wasser über die Leitung 80 in die Entsalzungseinrichtung 32 geleitet.

Nachfolgend wird die vorliegende Erfindung anhand eines illustrative, aber die Erfindung nicht einschränkenden Beispiels beschrieben.

### Beispiel

Es wurde das erfindungsgemäße Verfahren in einer in der Figur 1 gezeigten und vorstehend beschriebenen Anlage mit der Prozesssimulationssoftware PRO/II (AVEVA) zur Herstellung von 15.000 Litern Kerosin pro Tag simuliert. Dabei wurden folgende für die einzelnen Leitungen folgende Produktströme erhalten:

| **Nr.** | **Bezeichnung** | **kg/h** | **Nm³/h** |
|---|---|---|---|
| 14 | Luftzufuhrleitung | | 9576623 |
| 20 | Zufuhrleitung für Kohlendioxid zu der Synthesegasherstellungseinrichtung | 3941 | |
| 22 | Zufuhrleitung für Luft zu der Synthesegasherstellungseinrichtung | 7093 | |
| 24 | Zufuhrleitung für Wasser zu der Synthesegasherstellungseinrichtung | 3561 | |
| 25 | Rohsynthesegasabfuhrleitung in die Trenneinrichtung | 4407 | |
| 27 | Kohlendioxidrückfuhrleitung von Trenneinrichtung | 1216 | |
| 29 | Synthesegaszufuhrleitung von der Trenneinrichtung zu der Fischer-Tropsch-Einrichtung | 2794 | |
| 31 | Kohlenwasserstoffzufuhrleitung | 834 | |
| 34 | Wasserzufuhrleitung von der Einrichtung zur getrennten Gewinnung von Kohlendioxid und Wasser aus der Umgebungsluft in die Entsalzungseinrichtung | 4501 | |
| 36 | Wasserzufuhrleitung von der Synthesegasherstellungseinrichtung in die Entsalzungseinrichtung | 552 | |
| 38 | Wasserzufuhrleitung von der von der Trenneinrichtung in die Entsalzungseinrichtung | 397 | |
| 40 | Wasserabfuhrleitung von der Entsalzungseinrichtung zu der Fischer-Tropsch-Einrichtung | 4415 | |
| 44 | Wasserzufuhrleitung von der Raffinationseinrichtung zu der Wasserreinigungseinrichtung | 3.2 | |
| 46 | Wasserzufuhrleitung von der Fischer-Tropsch-Einrichtung zu der Wasserreinigungseinrichtung | 1413 | |
| 50 | Wasserdampfzufuhrleitung zu dem Pre-Reformer | 999 | |
| 52 | Zufuhrleitung für Brenngas und Rückgas in den Pre-Reformer | 576 | |
| 54 | Brenngasabfuhrleitung | 65 | |
| 56 | Gasabfuhrleitung | 547 | |
| 58 | Fackelgasabfuhrleitung | 37 | |
| 60 | Kreislaufgasleitung in die Synthesegasherstellungseinrichtung | 576 | |
| 62 | Wasserdampfabfuhrleitung aus dem Pre-Reformer | 999 | |
| 63 | Wasserdampfrückführleitung aus der Fischer- Tropsch-Einrichtung | 2562 | |
| 64 | Wasserdampfabfuhrleitung aus der Fischer- Tropsch-Einrichtung | 4349 | |
| 65 | Wasserdampfüberschussleitung aus der Fischer- Tropsch-Einrichtung | 1786 | |
| 70 | Wasserzufuhrleitung zu der Wasserstoffproduktionseinrichtung | 172 | |
| 72 | Luftzufuhrleitung | | 21130 |
| 76 | Wasserstoffleitung in die Wasserstoffverdichtunqseinrichtunq | 20.7 | |
| 78 | Wasserstoffleitung in die Raffinationseinrichtung | 18.9 | |
| 80 | Wasserabfuhrleitung in die Entsalzungseinrichtung | 1.8 | |
| 82 | Kerosinleitung | 484 | |
| 84 | Benzinleitung | 300 | |
| 86 | Abwasserleitung | 865 | |
| 86' | Abwasserleitung | 66 | |
| 86" | Abwasserleitung | 418 | |

### Bezugszeichenliste

- 10: Anlage zur Herstellung von synthetischen Kraftstoffen
- 12: Einrichtung zur getrennten Gewinnung von Kohlendioxid und Wasser aus der Umgebungsluft
- 14: Luftzufuhrleitung
- 16: Abluftleitung
- 18: Synthesegasherstellungseinrichtung
- 20: Zufuhrleitung für Kohlendioxid zu der Synthesegasherstellungseinrichtung
- 22: Zufuhrleitung für Luft zu der Synthesegasherstellungseinrichtung
- 24: Zufuhrleitung für Wasser zu der Synthesegasherstellungseinrichtung
- 25: Rohsynthesegasabfuhrleitung in die Trenneinrichtung
- 26: Trenneinrichtung zur Abtrennung von Kohlendioxid und Wasser aus Rohsynthesegas
- 27: Kohlendioxidrückführleitung von Trenneinrichtung
- 28: Fischer-Tropsch-Einrichtung
- 29: Synthesegaszufuhrleitung von der Trenneinrichtung zu der Fischer-Tropsch-Einrichtung
- 30: Raffinationseinrichtung
- 31: Kohlenwasserstoffzufuhrleitung
- 32: Entsalzungseinrichtung
- 34: Wasserzufuhrleitung von der Einrichtung zur getrennten Gewinnung von Kohlendioxid und Wasser aus der Umgebungsluft in die Entsalzungseinrichtung
- 36: Wasserzufuhrleitung von der Synthesegasherstellungseinrichtung in die Entsalzungseinrichtung
- 38: Wasserzufuhrleitung von der von der Trenneinrichtung in die Entsalzungseinrichtung
- 40: Wasserabfuhrleitung von der Entsalzungseinrichtung zu der Fischer-Tropsch-Einrichtung
- 42: Wasserreinigungseinrichtung
- 44: Wasserzufuhrleitung von der Raffinationseinrichtung zu der Wasserreinigungseinrichtung
- 46: Wasserzufuhrleitung von der Fischer-Tropsch-Einrichtung zu der Wasserreinigungseinrichtung
- 48: Pre-Reformer
- 50: Wasserdampfzufuhrleitung zu dem Pre-Reformer
- 52: Zufuhrleitung für Prozessgas und Rückgas in den Pre-Reformer
- 54: Prozessgasabfuhrleitung
- 56: Gasabfuhrleitung
- 58: Fackelgasabfuhrleitung
- 60: Kreislaufgasleitung in die Synthesegasherstellungseinrichtung
- 62: Wasserdampfabfuhrleitung aus dem Pre-Reformer
- 63: Wasserdampfrückführleitung aus der Fischer-Tropsch-Einrichtung
- 64: Wasserdampfabfuhrleitung aus der Fischer-Tropsch-Einrichtung
- 65: Wasserdampfüberschussleitung aus der Fischer-Tropsch-Einrichtung
- 66: Wasserstoffproduktionseinrichtung
- 68: Wasserstoffverdichtungseinrichtung
- 70: Wasserzufuhrleitung zu der Wasserstoffproduktionseinrichtung
- 72: Luftzufuhrleitung
- 74,74': Abluftleitung
- 76: Wasserstoffleitung in die Wasserstoffverdichtungseinrichtung
- 78: Wasserstoffleitung in die Raffinationseinrichtung
- 80: Wasserabfuhrleitung in die Entsalzungseinrichtung
- 82: Kerosinleitung
- 84: Benzinleitung
- 86, 86', 86": Abwasserleitung

## Patentansprüche

1. Anlage (10) zur Herstellung von synthetischen Kraftstoffen, insbesondere von Flugturbinenkraftstoff (Kerosin), Benzin und/oder Diesel, umfassend:
a) eine Einrichtung (12) zur getrennten Gewinnung von Kohlendioxid und Wasser aus der Umgebungsluft,
b) eine Synthesegasherstellungseinrichtung (18) zur Herstellung eines Kohlenmonoxid, Wasserstoff, Kohlendioxid und Wasser umfassenden Rohsynthesegases, wobei die Synthesegasherstellungseinrichtung (18) eine von der Einrichtung (12) zur getrennten Gewinnung von Kohlendioxid und Wasser aus der Umgebungsluft führende Zufuhrleitung (20) für Kohlendioxid, eine Zufuhrleitung (22) für Luft und eine Zufuhrleitung (24) für Wasser aufweist,
c) eine Trenneinrichtung (26) zur Abtrennung von Kohlendioxid und Wasser aus dem in der Synthesegasherstellungseinrichtung (18) hergestellten Rohsynthesegas,
d) eine Fischer-Tropsch-Einrichtung (28) zur Herstellung von Kohlenwasserstoffen durch ein Fischer-Tropsch-Verfahren aus dem Synthesegas, aus dem in der Trenneinrichtung (26) Kohlendioxid und Wasser abgetrennt wurden,
e) eine Raffinationseinrichtung (30) zur Raffination der in der Fischer-Tropsch-Einrichtung (28) hergestellten Kohlenwasserstoffe zu den synthetischen Kraftstoffen,
f) eine Entsalzungseinrichtung (32) zur Entsalzung von Wasser, wobei die Entsalzungseinrichtung (32) eine Wasserzufuhrleitung (34) von der Einrichtung (12) zur getrennten Gewinnung von Kohlendioxid und Wasser aus der Umgebungsluft, eine Wasserzufuhrleitung (36) von der Synthesegasherstellungseinrichtung (18) und eine Wasserzufuhrleitung (38) von der Trenneinrichtung (26) sowie eine Wasserabfuhrleitung (40) von der Fischer-Tropsch-Einrichtung (28) aufweist, und
g) eine Wasserreinigungseinrichtung (42), welche eine von der Raffinationseinrichtung (30) führende Wasserzufuhrleitung (44) und/oder eine von der Fischer-Tropsch-Einrichtung (28) führende Wasserzufuhrleitung (46) jeweils zur Reinigung von darin anfallendem Wasser umfasst.

2. Anlage (10) nach Anspruch 1, **dadurch gekennzeichnet, dass** diese keine Frischwasserzufuhrleitung aufweist.

3. Anlage (10) nach Anspruch 1 oder 2, **dadurch gekennzeichnet, dass** diese ferner einen Pre-Reformer (48) zur Umwandlung höherer Kohlenwasserstoffe in Methan, Kohlenoxide und Wasserstoff sowie eine von der Wasserreinigungseinrichtung (42) zu dem Pre-Reformer (48) führende Wasserzufuhrleitung (50) aufweist, wobei diese bevorzugt ferner eine von der Raffinationseinrichtung (30) in den Pre-Reformer (48) führende Prozessgaszufuhrleitung (54, 52), eine von der Fischer-Tropsch-Einrichtung (28) in den Pre-Reformer (48) führende Rückgasleitung (56, 52) sowie eine von dem Pre-Reformer (48) in die Synthesegasherstellungseinrichtung (18) führende Kreislaufgasleitung (60) aufweist, und bevorzugt auch eine von dem Pre-Reformer (48) die Synthesegasherstellungseinrichtung (18) führende Wasserdampfrückführleitung (62, 24) sowie eine von der Fischer-Tropsch-Einrichtung (28) in die Synthesegasherstellungseinrichtung (18) führende Wasserdampfrückführleitung (64, 24) aufweist.

4. Anlage (10) nach zumindest einem der vorhergehenden Ansprüche, **dadurch gekennzeichnet, dass** die Synthesegasherstellungseinrichtung (18) eine oder mehrere Co-Solid-Oxid-Elektrolysezellen umfasst.

5. Anlage (10) nach zumindest einem der vorhergehenden Ansprüche, **dadurch gekennzeichnet, dass** die Trenneinrichtung (26) einen Aminwäscher zur Abtrennung von Kohlendioxid durch Absorption aus dem Synthesegas, einen Verdichter zur Kondensation von Wasser und zur Verdichtung des Gases auf den in der Fischer-Tropsch-Synthese erforderlichen Druck, eine zu der Synthesegasherstellungseinrichtung (18) oder in die von der Einrichtung (12) zur getrennten Gewinnung von Kohlendioxid und Wasser in die Synthesegasherstellungseinrichtung (18) führende Leitung (20) für Kohlendioxid führende Kohlendioxidrückführleitung (27) sowie eine zu der Fischer-Tropsch-Einrichtung (28) führende Synthesegaszufuhrleitung (29) umfasst.

6. Anlage (10) nach zumindest einem der vorhergehenden Ansprüche, **dadurch gekennzeichnet, dass** die Entsalzungseinrichtung (32) einen oder mehrere Anionen- und Kationenaustauscher sowie eine Membraneinrichtung zur Entgasung umfasst, welche derart ausgelegt sind, dass Wasser soweit entsalzt und entgast werden kann, dass dessen Leitfähigkeit bei kleiner 20 µS/cm, bevorzugt kleiner 10 µS/cm, besonders bevorzugt kleiner 5 µS/cm und höchst bevorzugt maximal 2 µS/cm liegt.

7. Anlage (10) nach zumindest einem der vorhergehenden Ansprüche, **dadurch gekennzeichnet, dass** die Raffinationseinrichtung (30) einen oder mehrere Iso-Cracker-Reaktoren, einen Wasserstoffstripper und eine oder mehrere Destillationssäulen umfasst.

8. Anlage (10) nach zumindest einem der vorhergehenden Ansprüche, **dadurch gekennzeichnet, dass** diese ferner eine Wasserstoffproduktionseinrichtung (66) sowie eine Wasserstoffverdichtungseinrichtung (68) aufweist, wobei die Anlage (10) ferner eine von der Einrichtung (12) zur Entsalzung von Wasser zu der Wasserstoffproduktionseinrichtung (66) führende Wasserleitung (70), eine von der Wasserstoffverdichtungseinrichtung (68) zu der Entsalzungseinrichtung (32) führende Wasserleitung (80), eine von der Wasserstoffproduktionseinrichtung (66) zu der Wasserstoffverdichtungseinrichtung (68) führende Wasserstoffleitung (76) sowie eine von der Wasserstoffverdichtungseinrichtung (68) zu der Raffinationseinrichtung (30) führende Wasserstoffleitung (78) aufweist.

9. Verfahren zur Herstellung von synthetischen Kraftstoffen, insbesondere von Flugturbinenkraftstoff (Kerosin), Benzin und/oder Diesel, welches in einer Anlage (10) nach zumindest einem der vorhergehenden Ansprüche durchgeführt wird.

10. Verfahren nach Anspruch 9, **dadurch gekennzeichnet, dass** bei dem Verfahren kein Frischwasser zugeführt wird.

11. Verfahren nach Anspruch 9 oder 10, **dadurch gekennzeichnet, dass** in der Entsalzungseinrichtung (32) das Wasser zu Wasser mit einer Leitfähigkeit von kleiner 20 µS/cm, bevorzugt kleiner 10 µS/cm, besonders bevorzugt kleiner 5 µS/cm und höchst bevorzugt maximal 2 µS/cm gereinigt wird.

12. Verfahren nach zumindest einem der Ansprüche 9 bis 11, **dadurch gekennzeichnet, dass** aus der Fischer-Tropsch-Einrichtung (28) Fackelgas abgeleitet wird, wobei der Fackelgasstrom größer ist als der Quotient von aus dem aus der Einrichtung (12) zur getrennten Gewinnung von Kohlendioxid und Wasser aus der Umgebungsluft abgeführten Strom enthaltenem Mengenstrom von Stickstoff und von Argon und der in dem Rückgasstrom von der Fischer-Tropsch-Einrichtung (28) in den Pre-Reformer (48) eingestellten Gesamtkonzentration von Stickstoff und von Argon, wobei die Gesamtkonzentration von Stickstoff und von Argon in dem Rückgasstrom von der Fischer-Tropsch-Einrichtung (28) in den Pre-Reformer (48) vorzugsweise auf 1,5 bis 10 Mass.-% eingestellt wird.

13. Verfahren nach zumindest einem der Ansprüche 9 bis 12, **dadurch gekennzeichnet, dass** die Anlage (10) eine Wasserstoffproduktionseinrichtung (66) sowie eine Wasserstoffverdichtungseinrichtung (68) aufweist und die Raffinationseinrichtung (30) einen oder mehrere Iso-Cracker-Reaktoren, einen Wasserstoffstripper und eine oder mehrere Destillationssäulen umfasst, wobei der in der Wasserstoffproduktionseinrichtung (66) erzeugte Wasserstoff der Wasserstoffverdichtungseinrichtung (68) zugeführt und in dieser verdichtet wird und der verdichtete Wasserstoff dem Wasserstoffstripper der Raffinationseinrichtung (30) zugeführt wird.

14. Verfahren nach zumindest einem der Ansprüche 9 bis 13, **dadurch gekennzeichnet, dass** die Raffinationseinrichtung (30) einen oder mehrere Iso-Cracker-Reaktoren umfasst, in dem ein Edelmetall-Katalysator eingesetzt wird, der keine Sulfidierung erfordert, und die Anlage (10) einen Pre-Reformer (48) umfasst und der Wasserreinigungseinrichtung (42) Wasser aus der Fischer-Tropsch-Einrichtung (28) und Wasser aus der Raffinationseinrichtung (30) zugeführt werden, das Wasser in der Wasserreinigungseinrichtung (42) durch Teilverdampfung gereinigt wird, wobei mindestens 70% des gereinigten Wassers dem Pre-Reformer (48) zugeführt werden und weniger als 30% des gereinigten Wassers einen CSB von weniger als 2.000 mg/l aufweist und zu einer kommunalen Abwasseranlage geführt wird.

15. Verfahren nach zumindest einem der Ansprüche 9 bis 14, **dadurch gekennzeichnet, dass** wenigstens 80%, bevorzugt wenigstens 90%, besonders bevorzugt wenigstens 95% und höchst bevorzugt 100% des Wassers, welches in der Einrichtung (12) zur getrennten Gewinnung von Kohlendioxid und Wasser aus der Umgebungsluft, in der Synthesegasherstellungseinrichtung (18), in der Trenneinrichtung (26) sowie in der optionalen Wasserstoffverdichtungseinrichtung (68) anfällt, der Entsalzungseinrichtung (32) zugeführt werden.
